# EUROPEAN PATENT SPECIFICATION

(11) **EP 3 497 969 B1**
(45) Date of publication and mention of the grant of the patent: **13.09.2023**
(21) Application number: 17755010.0
(22) Date of filing: 11.08.2017
(51) Int. Cl.: H04W 36/00, H04W 36/08, H04W 36/30

(54) **HANDOVER IN WIRELESS COMMUNICATIONS**
ÜBERGABE IN DER DRAHTLOSEN KOMMUNIKATION
TRANSFERT D'APPEL EN COMMUNICATIONS SANS FIL

(30) Priority: 12.08.2016 US 201662374295 P; 30.09.2016 US 201662402570 P; 10.08.2017 US 201715674094
(43) Date of publication of application: 19.06.2019
(73) Proprietor: QUALCOMM Incorporated, San Diego, CA 92121-1714 (US)
(72) Inventor: OZTURK, Ozcan, San Diego, California 92121-1714 (US); GAAL, Peter, San Diego, California 92121 (US); KITAZOE, Masato, San Diego, California 92121-1714 (US); CHEN, Wanshi, San Diego, California 92121 (US); SUN, Jing, San Diego, California 92121-1714 (US)
(74) Representative: Bardehle Pagenberg Partnerschaft mbB Patentanwälte Rechtsanwälte
(86) International application number: PCT/US2017/046590
(87) International publication number: WO 2018/031931

(56) References cited:
- WO-A1-2015/127987
- WO-A1-2016/031779
- WO-A2-2013/009054
- CN-A- 101 998 553
- US-A1- 2007 047 493
- US-A1- 2015 105 084
- CATT: "Impact of CoMP on Control Plane", 3GPP DRAFT; R2-094330, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352569, [retrieved on 2009-08-18]

## Description

### BACKGROUND

### Field

Certain aspects of the present disclosure generally relate to wireless communications and, more particularly, to techniques for performing handover from a source base station to a target base station.

### Background

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include Code Division Multiple Access (CDMA) systems, Time Division Multiple Access (TDMA) systems, Frequency Division Multiple Access (FDMA) systems, 3rd Generation Partnership Project (3GPP) Long Term Evolution (LTE) systems, Long Term Evolution Advanced (LTE-A) systems, Orthogonal Frequency Division Multiple Access (OFDMA) systems, and 5th generation wireless systems (5G).

Generally, a wireless multiple-access communication system can simultaneously support communication for multiple wireless terminals, as for example described in 3GPP R2-094330. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-input single-output, multiple-input single-output or a multiple-input multiple-output (MIMO) system.

Since terminals may be mobile, the terminals may move between coverage areas of different base stations. Further, the terminals may be actively communicating within the wireless communication system while moving between such coverage areas. Accordingly, the wireless multiple-access communication system may support performing a handover of the connection used by the terminal to communicate in the wireless communication system from a source base station to a target base station so that the terminal does not experience a loss of connectivity as the terminal moves between coverage areas, as for example described in US 2015/0105084 A1.

### SUMMARY

The invention is defined by the claims. Embodiments and aspects that do not fall within the scope of the claims are merely examples used for explanation of the invention. Certain aspects of the present disclosure provide a method of wireless communication by a target base station. The method includes receiving a handover request from a source base station for handover of communication of a user equipment from the source base station to the target base station; generating an uplink grant for the user equipment to transmit a handover complete message based on receiving the handover request at the target base station; selecting a starting time for the validity of the uplink grant with respect to a subframe offset between the target base station and the source base station; and communicating the uplink grant and the starting time for the uplink grant to the user equipment via the source base station, wherein communicating the uplink grant comprises transmitting a radio resource control container including a radio resource control connection reconfiguration message to the source base station for retransmission of the uplink grant and the starting time for the uplink grant to the user equipment.

Certain aspects of the present disclosure provide a method of wireless communication by a user equipment. The method includes receiving, from a target base station via a source base station, an uplink grant and a starting time for the validity of the uplink grant with respect to a subframe offset between the target base station and the source base station in a radio resource control container including a radio resource control connection reconfiguration message for the user equipment to transmit a handover complete message to the target base station for handover of communication of the user equipment from the source base station to the target base station based on a handover request from the source base station to the target base station; and transmitting the handover complete message based on the grant.

Certain aspects of the present disclosure provide a target base station. The target base station includes means for receiving a handover request from a source base station for handover of communication of a user equipment from the source base station to the target base station; means for generating an uplink grant for the user equipment to transmit a handover complete message based on receiving the handover request at the target base station; means for selecting a starting time for the validity of the uplink grant with respect to a subframe offset between the target base station and the source base station; and communicating the uplink grant and the starting time for the uplink grant to the user equipment via the source base station, wherein communicating the uplink grant comprises transmitting a radio resource control container including a radio resource control connection reconfiguration message to the source base station for retransmission of the uplink grant and the starting time for the uplink grant to the user equipment.

Certain aspects of the present disclosure provide a user equipment. The user equipment includes means for receiving, from a target base station via a source base station, an uplink grant and a starting time for the validity of the uplink grant with respect to a subframe offset between the target base station and the source base station in a radio resource control container including a radio resource control connection reconfiguration message for the user equipment to transmit a handover complete message to the target base station for handover of communication of the user equipment from the source base station to the target base station based on a handover request from the source base station to the target base station; and means for transmitting the handover complete message based on the grant.

Certain aspects of the present disclosure provide a computer readable medium having instructions stored thereon for causing at least one processor in a target base station to perform the method.

Certain aspects of the present disclosure provide a computer readable medium having instructions stored thereon for causing at least one processor in a user equipment to perform the method.

Aspects generally include methods, apparatus, systems, computer program products, computer-readable medium, and processing systems, as substantially described herein with reference to and as illustrated by the accompanying drawings. "LTE" refers generally to LTE, LTE-Advanced (LTE-A), LTE in an unlicensed spectrum (LTE-U), etc.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings.
FIG. 1 is a diagram illustrating an example of a network architecture.
FIG. 2 is a diagram illustrating an example of an access network.
FIG. 3 is a diagram illustrating an example of a DL frame structure in LTE.
FIG. 4 is a diagram illustrating an example of an UL frame structure in LTE.
FIG. 5 is a diagram illustrating an example of a radio protocol architecture for the user and control plane.
FIG. 6 is a diagram illustrating an example of an evolved Node B and user equipment in an access network, in accordance with certain aspects of the disclosure.
FIG. 7 illustrates an example logical architecture of a distributed radio access network (RAN), in accordance with certain aspects of the present disclosure.
FIG. 8 illustrates an example physical architecture of a distributed RAN, in accordance with certain aspects of the present disclosure.
FIG. 9 is a diagram illustrating an example of a downlink (DL)-centric subframe, in accordance with certain aspects of the present disclosure.
FIG. 10 is a diagram illustrating an example of an uplink (UL)-centric subframe, in accordance with certain aspects of the present disclosure.
FIG. 11 illustrates an example flow diagram for performing a RACH procedure based handover.
FIG. 12 illustrates an example of a semi-persistent scheduling for an uplink (UL) grant.
FIG. 13 illustrates example operations for performing handover that may be performed by a target base station, in accordance with certain aspects of the present disclosure.
FIG. 14 illustrates example operations for performing handover that may be performed by a user equipment, in accordance with certain aspects of the present disclosure.
FIG. 15 illustrates example operations for performing handover that may be performed by a target base station, in accordance with certain aspects of the present disclosure.
FIG. 16 illustrates example operations for performing handover that may be performed by a user equipment, in accordance with certain aspects of the present disclosure.
FIG. 17 illustrates example operations performed by a user equipment (UE) to obtain uplink resources for completing handover from a source base station to a target base station, in accordance with certain aspects of the present disclosure.
FIG. 18 illustrates example operations for signaling uplink resources for handing over from a source base station to a target base station, in accordance with certain aspects of the present disclosure.
FIG. 19 is a call flow diagram illustrating an example message exchange between a UE and a target base station for obtaining uplink resources for completing handover from a source base station to the target base station, in accordance with certain aspects of the present disclosure.
FIG. 20 is a call flow diagram illustrating an example message exchange a user equipment (UE) for obtaining uplink resources for completing handover from a source base station to a target base station, in accordance with certain aspects of the present disclosure.
FIG. 21 illustrates example operations for performing a random access procedure with reduced latency relative to a legacy random access procedure, in accordance with certain aspects of the present disclosure.
FIG. 22 illustrates example operations for performing a random access procedure with reduced latency relative to a legacy random access procedure, in accordance with certain aspects of the present disclosure.

To facilitate understanding, identical reference numerals have been used, where possible, to designate identical elements that are common to the figures. It is contemplated that elements disclosed in one embodiment may be beneficially utilized on other embodiments without specific recitation.

### DETAILED DESCRIPTION

According to aspects of the present disclosure, techniques are provided to perform handover of a session (e.g., ongoing call or data session) of a user equipment from a source base station to a target base station. For example, a user equipment may be communicating in a session via the source base station and moving toward an area that is outside the coverage area of the source base station. Accordingly, in order to maintain the session outside the coverage area of the source base station, the user equipment may need to continue communicating in the session via another base station that provides coverage in that area (i.e., a target base station). Therefore, the session may need to be handed over from the source base station to the target base station to maintain the session. Though aspects of the present disclosure are described with respect to LTE systems, the aspects may also be used for other appropriate wireless communication networks, including other yet to be defined wireless communication networks, such as those implementing 5G systems, and systems using different types of radio technologies.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using hardware, software, or combinations thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, firmware, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, or combinations thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise RAM, ROM, EEPROM, PCM (phase change memory), flash memory, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

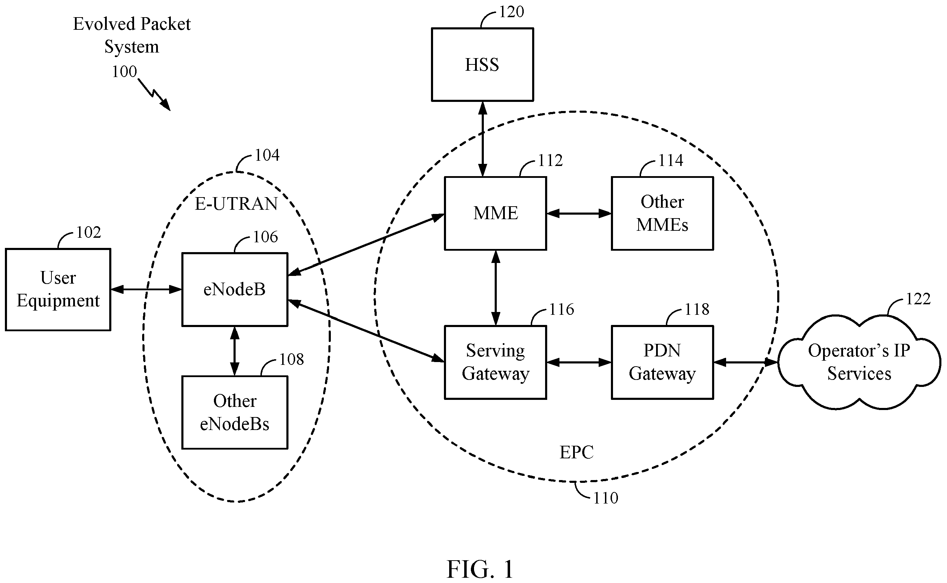

FIG. 1 is a diagram illustrating an LTE network architecture 100 in which aspects of the present disclosure may be practiced.

The LTE network architecture 100 may be referred to as an Evolved Packet System (EPS) 100. The EPS 100 may include one or more user equipment (UE) 102, an Evolved UMTS Terrestrial Radio Access Network (E-UTRAN) 104, an Evolved Packet Core (EPC) 110, a Home Subscriber Server (HSS) 120, and an Operator's IP Services 122. The EPS can interconnect with other access networks, but for simplicity those entities/interfaces are not shown. Exemplary other access networks may include an IP Multimedia Subsystem (IMS) PDN, Internet PDN, Administrative PDN (e.g., Provisioning PDN), carrier-specific PDN, operator-specific PDN, and/or GPS PDN. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 106 and other eNBs 108. The eNB 106 provides user and control plane protocol terminations toward the UE 102. The eNB 106 may be connected to the other eNBs 108 via an X2 interface (e.g., backhaul). The eNB 106 may also be referred to as a base station, a base transceiver station, a radio base station, a radio transceiver, a transceiver function, a basic service set (BSS), an extended service set, an access point, or some other suitable terminology. The eNB 106 may provide an access point to the EPC 110 for a UE 102. Examples of UEs 102 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a netbook, a smart book, an ultrabook, a drone, a robot, a sensor, a monitor, a meter, or any other similar functioning device. The UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 106 is connected by an S1 interface to the EPC 110. The EPC 110 includes a Mobility Management Entity (MME) 112, other MMEs 114, a Serving Gateway 116, and a Packet Data Network (PDN) Gateway 118. The MME 112 is the control node that processes the signaling between the UE 102 and the EPC 110. Generally, the MME 112 provides bearer and connection management. All user IP packets are transferred through the Serving Gateway 116, which itself is connected to the PDN Gateway 118. The PDN Gateway 118 provides UE IP address allocation as well as other functions. The PDN Gateway 118 is connected to the Operator's IP Services 122. The Operator's IP Services 122 may include, for example, the Internet, the Intranet, an IP Multimedia Subsystem (IMS), and a PS (packet-switched) Streaming Service (PSS). In this manner, the UE 102 may be coupled to the PDN through the LTE network.

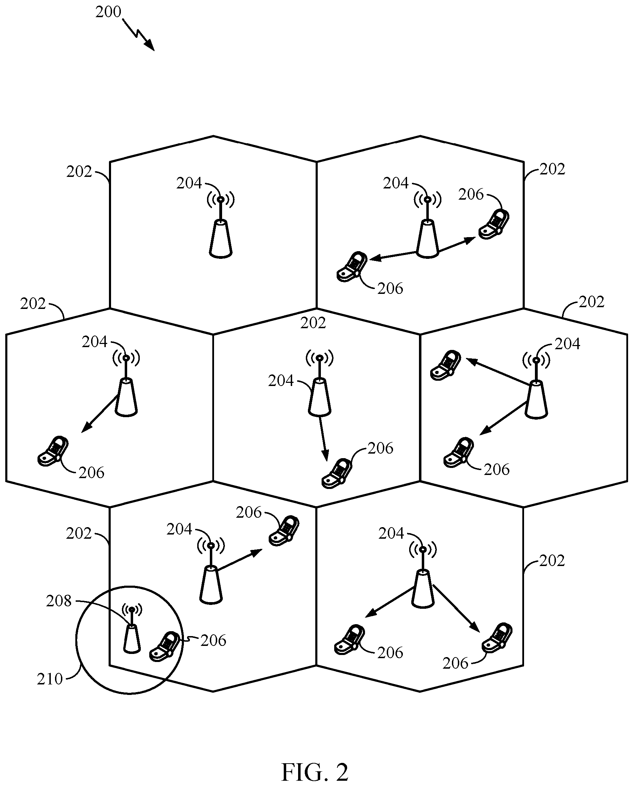

FIG. 2 is a diagram illustrating an example of an access network 200 in an LTE network architecture in which aspects of the present disclosure may be practiced.

In this example, the access network 200 is divided into a number of cellular regions (cells) 202. One or more lower power class eNBs 208 may have cellular regions 210 that overlap with one or more of the cells 202. A lower power class eNB 208 may be referred to as a remote radio head (RRH). The lower power class eNB 208 may be a femto cell (e.g., home eNB (HeNB)), pico cell, or micro cell. The macro eNBs 204 are each assigned to a respective cell 202 and are configured to provide an access point to the EPC 110 for all the UEs 206 in the cells 202. There is no centralized controller in this example of an access network 200, but a centralized controller may be used in alternative configurations. The eNBs 204 are responsible for all radio related functions including radio bearer control, admission control, mobility control, scheduling, security, and connectivity to the serving gateway 116. The network 200 may also include one or more relays (not shown). According to one application, a UE may serve as a relay.

Since UEs 206 may be mobile, they may move from a cell 202/region 210 associated with one eNB 204/208 to a cell 202/region 210 associated with another eNB 204/208. Further, the UE 206 may have an active session, (e.g., ongoing call or data session) during the movement from one cell 202/region 210 to another. For example, a UE 206 may be moving away from one eNB 204/208 and toward another eNB 204/208, while in a session and communicating in the network 200. Accordingly, the UE 206 may move out of one cell 202/region 210 and into another cell 202/region 210. In order to maintain the session, therefore, the UE 206 may need to have the session handed over from the source eNB 204/208 to the target eNB 204/208, so that the UE 206 can communicate via the target eNB 204/208. Such a handover may occur, for example, while the 206 is in an area covered by both the source eNB 204/208 and the target eNB 204/208, meaning the UE 206 is able to communicate with both the source eNB 204/208 and the target eNB 204/208. In certain aspects, the techniques described herein relate to handover of the UE from a source eNB (i.e., source base station) to a target eNB (i.e., target base station).

The modulation and multiple access scheme employed by the access network 200 may vary depending on the particular telecommunications standard being deployed. In LTE applications, OFDM is used on the DL and SC-FDMA is used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 204 may have multiple antennas supporting MIMO technology. The use of MIMO technology enables the eNBs 204 to exploit the spatial domain to support spatial multiplexing, beamforming, and transmit diversity. Spatial multiplexing may be used to transmit different streams of data simultaneously on the same frequency. The data streams may be transmitted to a single UE 206 to increase the data rate or to multiple UEs 206 to increase the overall system capacity. This is achieved by spatially precoding each data stream (e.g., applying a scaling of an amplitude and a phase) and then transmitting each spatially precoded stream through multiple transmit antennas on the DL. The spatially precoded data streams arrive at the UE(s) 206 with different spatial signatures, which enables each of the UE(s) 206 to recover the one or more data streams destined for that UE 206. On the UL, each UE 206 transmits a spatially precoded data stream, which enables the eNB 204 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

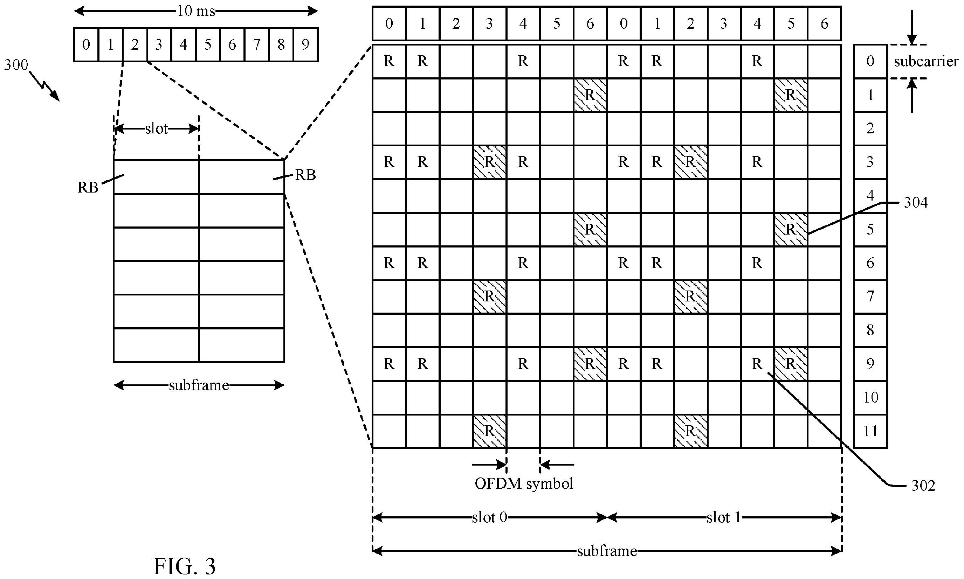

FIG. 3 is a diagram 300 illustrating an example of a DL frame structure in LTE. A frame (10 ms) may be divided into 10 equally sized sub-frames with indices of 0 through 9. Each sub-frame may include two consecutive time slots. A resource grid may be used to represent two time slots, each time slot including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. Since each sub-frame is made up of 2 time slots, and thus 2 resource blocks, each sub-frame includes 14 OFDM symbols. For an extended cyclic prefix, a resource block contains 6 consecutive OFDM symbols in the time domain and has 72 resource elements. Some of the resource elements, as indicated as R 302, R 304, include DL reference signals (DL-RS). The DL-RS include Cell-specific RS (CRS) (also sometimes called common RS) 302 and UE-specific RS (UE-RS) 304. UE-RS 304 are transmitted only on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

In LTE, in certain aspects, an eNB may send a primary synchronization signal (PSS) and a secondary synchronization signal (SSS) for each cell in the eNB. The synchronization signals may be used by UEs for cell detection and acquisition. The eNB may also send a Physical Broadcast Channel (PBCH). The PBCH may carry certain system information.

The eNB may send a Physical Control Format Indicator Channel (PCFICH) in the first symbol period of each subframe. The PCFICH may convey the number of symbol periods (M) used for control channels, where M may be equal to 1, 2 or 3 and may change from subframe to subframe. M may also be equal to 4 for a small system bandwidth, e.g., with less than 10 resource blocks. The eNB may send a Physical HARQ Indicator Channel (PHICH) and a Physical Downlink Control Channel (PDCCH) in the first M symbol periods of each subframe. The PHICH may carry information to support hybrid automatic repeat request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs, and may also send the PDSCH in a unicast manner to specific UEs.

A number of resource elements may be available in each symbol period. Each resource element (RE) may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 36, or 72 REGs, which may be selected from the available REGs, in the first M symbol periods, for example. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

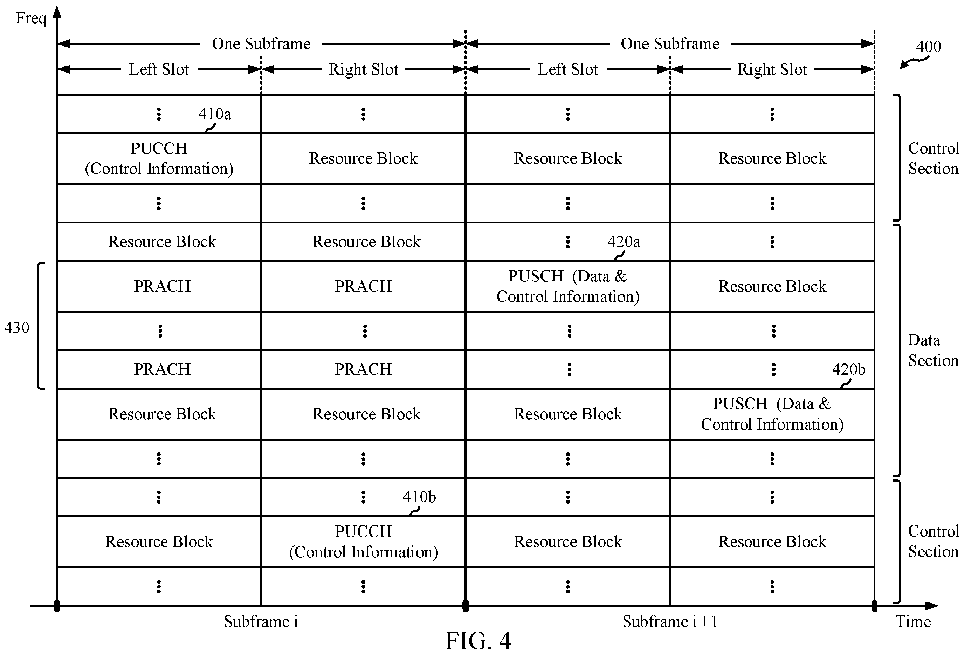

FIG. 4 is a diagram 400 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 410a, 410b in the control section to transmit control information to an eNB. The UE may also be assigned resource blocks 420a, 420b in the data section to transmit data to the eNB. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 430. The PRACH 430 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

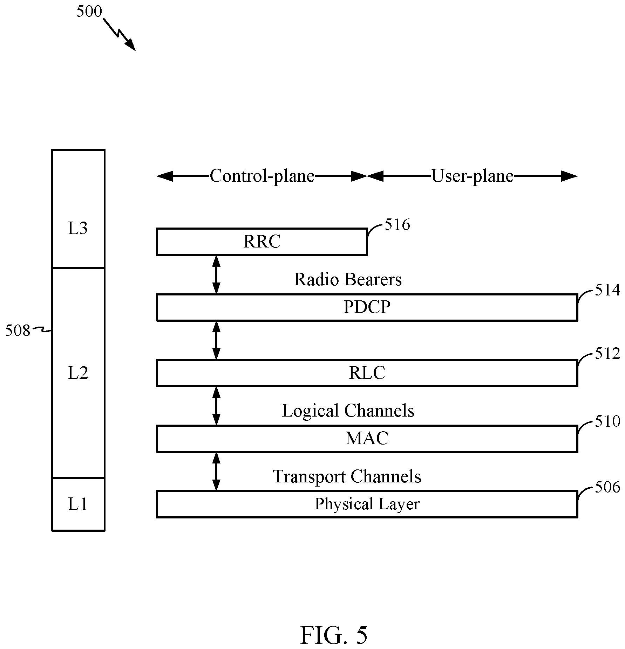

FIG. 5 is a diagram 500 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and eNB over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the eNB on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between eNBs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and eNB is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (i.e., radio bearers) and for configuring the lower layers using RRC signaling between the eNB and the UE.

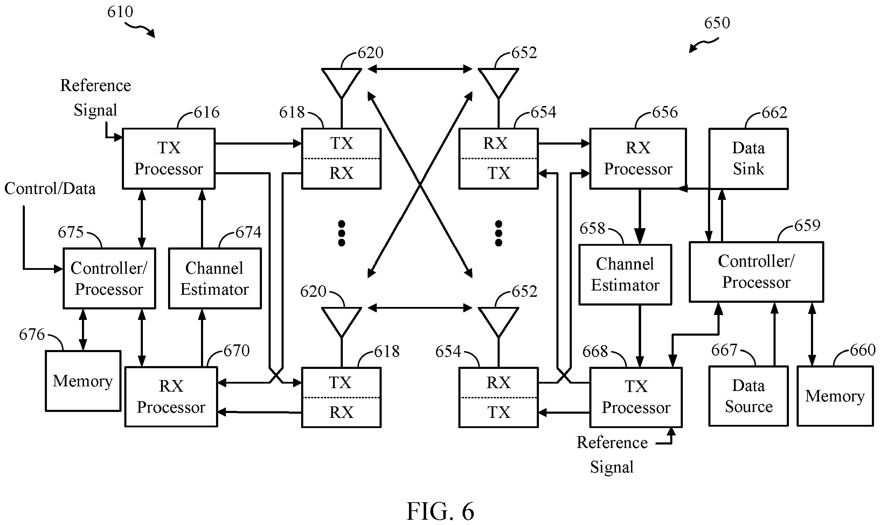

FIG. 6 is a block diagram of an eNB 610 in communication with a UE 650 in an access network, in which aspects of the present disclosure may be practiced.

In the DL, upper layer packets from the core network are provided to a controller/processor 675. The controller/processor 675 implements the functionality of the L2 layer, for example. In the DL, the controller/processor 675 provides header compression, ciphering, packet segmentation and reordering, multiplexing between logical and transport channels, and radio resource allocations to the UE 650 based on various priority metrics. The controller/processor 675 is also responsible for HARQ operations, retransmission of lost packets, and signaling to the UE 650.

The TX processor 616 implements various signal processing functions for the L1 layer (i.e., physical layer), for example. The signal processing functions includes coding and interleaving to facilitate forward error correction (FEC) at the UE 650 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 674 may be used to determine the coding and modulation scheme, as well as for spatial processing. The channel estimate may be derived from a reference signal and/or channel condition feedback transmitted by the UE 650. Each spatial stream is then provided to a different antenna 620 via a separate transmitter 618TX. Each transmitter 618TX modulates an RF carrier with a respective spatial stream for transmission.

At the UE 650, each receiver 654RX receives a signal through its respective antenna 652. Each receiver 654RX recovers information modulated onto an RF carrier and provides the information to the receiver (RX) processor 656. The RX processor 656 implements various signal processing functions of the L1 layer, for example. The RX processor 656 performs spatial processing on the information to recover any spatial streams destined for the UE 650. If multiple spatial streams are destined for the UE 650, they may be combined by the RX processor 656 into a single OFDM symbol stream. The RX processor 656 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNB 610. These soft decisions may be based on channel estimates computed by the channel estimator 658. The soft decisions are then decoded and deinterleaved to recover the data and control signals that were originally transmitted by the eNB 610 on the physical channel. The data and control signals are then provided to the controller/processor 659.

The controller/processor 659 implements the L2 layer, for example. The controller/processor 659 can be associated with a memory 660 that stores program codes and data. The memory 660 may be referred to as a computer-readable medium. In the UL, the controller/processor 659 provides demultiplexing between transport and logical channels, packet reassembly, deciphering, header decompression, control signal processing to recover upper layer packets from the core network. The upper layer packets are then provided to a data sink 662, which represents all the protocol layers above the L2 layer. Various control signals may also be provided to the data sink 662 for L3 processing. The controller/processor 659 is also responsible for error detection using an acknowledgement (ACK) and/or negative acknowledgement (NACK) protocol to support HARQ operations.

In the UL, a data source 667 is used to provide upper layer packets to the controller/processor 659, for example. The data source 667 represents all protocol layers above the L2 layer, for example. Similar to the functionality described in connection with the DL transmission by the eNB 610, the controller/processor 659 implements the L2 layer for the user plane and the control plane by providing header compression, ciphering, packet segmentation and reordering, and multiplexing between logical and transport channels based on radio resource allocations by the eNB 610, for example. The controller/processor 659 is also responsible for HARQ operations, retransmission of lost packets, and signaling to the eNB 610, for example.

Channel estimates derived by a channel estimator 658 from a reference signal or feedback transmitted by the eNB 610 may be used by the TX processor 668 to select the appropriate coding and modulation schemes, and to facilitate spatial processing. The spatial streams generated by the TX processor 668 are provided to different antenna 652 via separate transmitters 654TX. Each transmitter 654TX modulates an RF carrier with a respective spatial stream for transmission.

The UL transmission is processed at the eNB 610 in a manner similar to that described in connection with the receiver function at the UE 650. Each receiver 618RX receives a signal through its respective antenna 620. Each receiver 618RX recovers information modulated onto an RF carrier and provides the information to a RX processor 670. The RX processor 670 may implement the L1 layer, for example.

The controller/processor 675 implements the L2 layer, for example. The controller/processor 675 can be associated with a memory 676 that stores program codes and data. The memory 676 may be referred to as a computer-readable medium. In the UL, the control/processor 675 provides demultiplexing between transport and logical channels, packet reassembly, deciphering, header decompression, control signal processing to recover upper layer packets from the UE 650. Upper layer packets from the controller/processor 675 may be provided to the core network. The controller/processor 675 is also responsible for error detection using an ACK and/or NACK protocol to support HARQ operations. The controllers/processors 675, 659 may direct the operations at the eNB 610 and the UE 650, respectively.

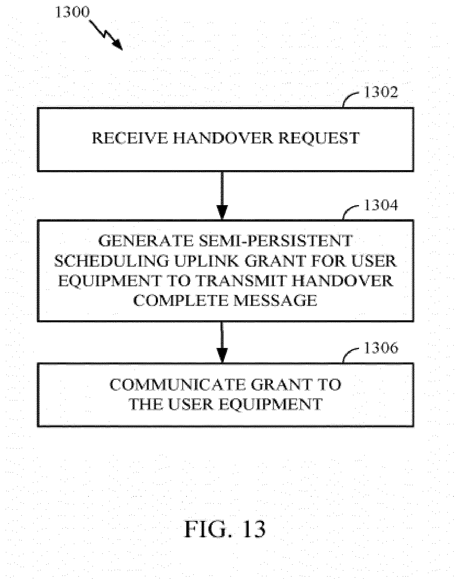

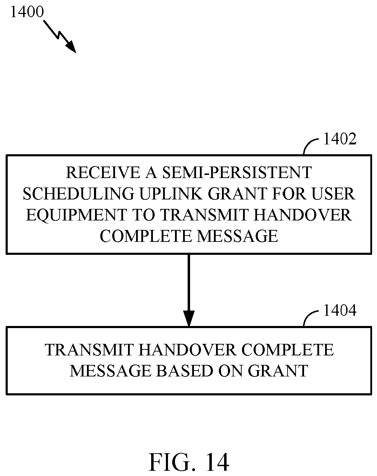

The controller/processor 659 and/or other processors, components and/or modules at the UE 650 may perform or direct operations, for example operations 1400, 1600, or 1700 in FIGs. 14, 16, and 17, and/or other processes or techniques described herein for performing handover from a source base station to a target base station. The controller/processor 675 and/or other processors, components and/or modules at the eNB 610 may perform or direct operations, for example operations 1300, 1500, or 1800 in FIGs. 13, 15, and 18, and/or other processes or techniques described herein for performing handover from a source base station to a target base station. In certain aspects, one or more of any of the components shown in FIG. 6 may be employed to perform operations, and/or other processes for the techniques described herein. The memories 660 and 676 may store data and program codes for the UE 650 and eNB 610 respectively, accessible and executable by one or more other components of the UE 650 and the eNB 610.

### EXAMPLE NEW RADIO (NR)/5G RADIO ACCESS NETWORK ARCHITECTURE

While aspects of the examples described herein may be associated with LTE technologies, aspects of the present disclosure may be applicable with other wireless communications systems, such as NR or 5G technologies.

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a cyclic prefix (CP) on the uplink and downlink and may include support for half-duplex operation using time division duplexing (TDD). NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra-reliable low latency communications (URLLC) service.

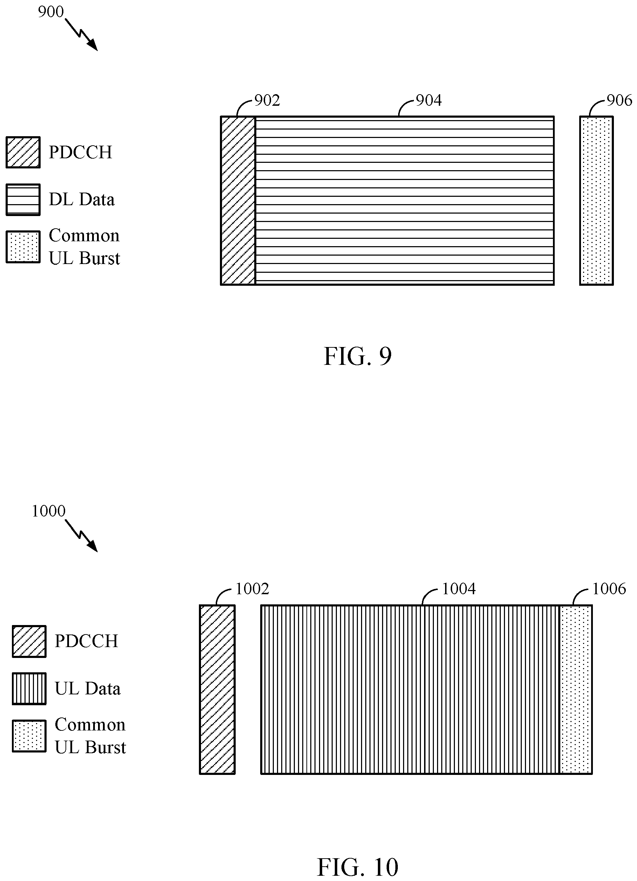

A single component carrier bandwidth of 100 MHZ may be supported. In one example, NR resource blocks (RBs) may span 12 sub-carriers with a sub-carrier bandwidth of 75 kHz over a 0.1 ms duration or a bandwidth of 15 kHz over a 1 ms duration. Each radio frame may consist of 10 or 50 subframes with a length of 10 ms. Each subframe may have a length of 0.2 ms. Each subframe may indicate a link direction (i.e., DL or UL) for data transmission and the link direction for each subframe may be dynamically switched. Each subframe may include DL/UL data as well as DL/UL control data. UL and DL subframes for NR may be as described in more detail below with respect to FIGs. 9 and 10.

Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based interface.

The NR RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity and may not be used for initial access, cell selection/reselection, or handover. In some cases, DCells may not transmit synchronization signals (SS)-in some case cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

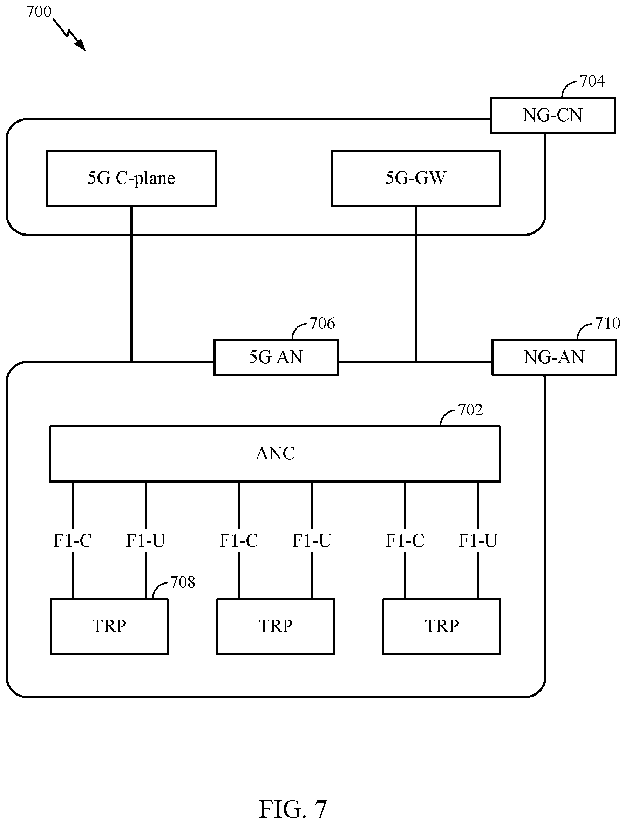

FIG. 7 illustrates an example logical architecture of a distributed RAN 700, according to aspects of the present disclosure. A 5G access node 706 may include an access node controller (ANC) 702. The ANC may be a central unit (CU) of the distributed RAN 700. The backhaul interface to the next generation core network (NG-CN) 704 may terminate at the ANC. The backhaul interface to neighboring next generation access nodes (NG-ANs) may terminate at the ANC. The ANC may include one or more TRPs 708 (which may also be referred to as BSs, NR BSs, Node Bs, 5G NBs, APs, or some other term). As described above, a TRP may be used interchangeably with "cell."

The TRPs 708 may be a distributed unit (DU). The TRPs may be connected to one ANC (ANC 702) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture 700 may be used to illustrate fronthaul definition. The architecture may be defined that support fronthauling solutions across different deployment types. For example, the architecture may be based on transmit network capabilities (e.g., bandwidth, latency, and/or jitter). The architecture may share features and/or components with LTE. According to aspects, the next generation AN (NG-AN) 710 may support dual connectivity with NR. The NG-AN may share a common fronthaul for LTE and NR.

The architecture may enable cooperation between and among TRPs 708. For example, cooperation may be preset within a TRP and/or across TRPs via the ANC 702. According to aspects, no inter-TRP interface may be needed/present.

According to aspects, a dynamic configuration of split logical functions may be present within the architecture 700. The PDCP, RLC, MAC protocol may be adaptably placed at the ANC or TRP.

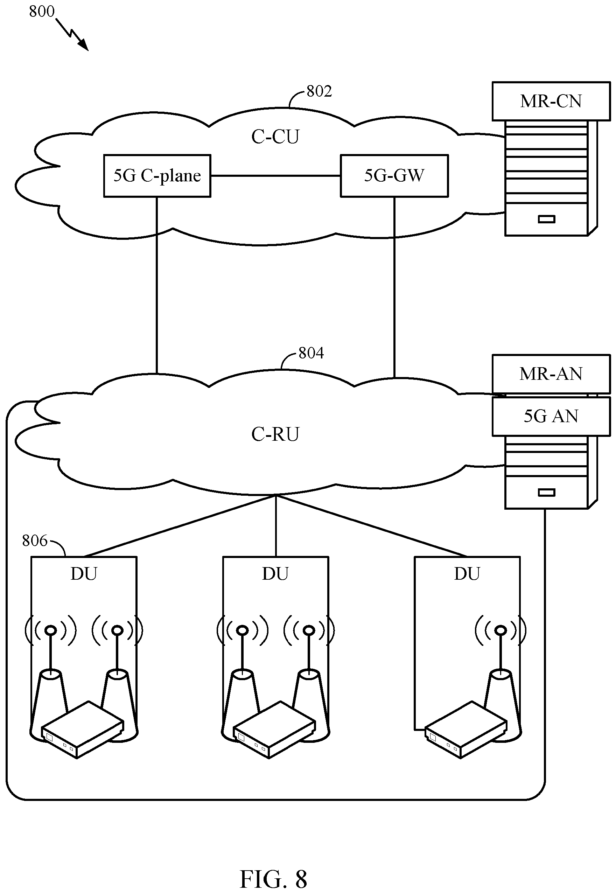

FIG. 8 illustrates an example physical architecture of a distributed RAN 800, according to aspects of the present disclosure. A centralized core network unit (C-CU) 802 may host core network functions. The C-CU may be centrally deployed. C-CU functionality may be offloaded (e.g., to advanced wireless services (AWS)), in an effort to handle peak capacity. A centralized RAN unit (C-RU) 804 may host one or more ANC functions. Optionally, the C-RU may host core network functions locally. The C-RU may have distributed deployment. The C-RU may be closer to the network edge. A distributed unit (DU) 806 may host one or more TRPs. The DU may be located at edges of the network with radio frequency (RF) functionality.

FIG. 9 is a diagram 900 showing an example of a DL-centric subframe. The DL-centric subframe may include a control portion 902. The control portion 902 may exist in the initial or beginning portion of the DL-centric subframe. The control portion 802 may include various scheduling information and/or control information corresponding to various portions of the DL-centric subframe. In some configurations, the control portion 902 may be a physical DL control channel (PDCCH), as indicated in FIG. 8. The DL-centric subframe may also include a DL data portion 904. The DL data portion 904 may sometimes be referred to as the payload of the DL-centric subframe. The DL data portion 904 may include the communication resources utilized to communicate DL data from the scheduling entity (e.g., UE or BS) to the subordinate entity (e.g., UE). In some configurations, the DL data portion 904 may be a physical DL shared channel (PDSCH).

The DL-centric subframe may also include a common UL portion 906. The common UL portion 906 may sometimes be referred to as an UL burst, a common UL burst, and/or various other suitable terms. The common UL portion 906 may include feedback information corresponding to various other portions of the DL-centric subframe. For example, the common UL portion 906 may include feedback information corresponding to the control portion 902. Non-limiting examples of feedback information may include an ACK signal, a NACK signal, a HARQ indicator, and/or various other suitable types of information. The common UL portion 906 may include additional or alternative information, such as information pertaining to random access channel (RACH) procedures, scheduling requests (SRs), and various other suitable types of information. As illustrated in FIG. 9, the end of the DL data portion 904 may be separated in time from the beginning of the common UL portion 906. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric subframe and alternative structures having similar features may exist without necessarily deviating from the aspects described herein.

FIG. 10 is a diagram 1000 showing an example of an UL-centric subframe. The UL-centric subframe may include a control portion 1002. The control portion 1002 may exist in the initial or beginning portion of the UL-centric subframe. The control portion 1002 in FIG. 10 may be similar to the control portion 1002 described above with reference to FIG. 10. The UL-centric subframe may also include an UL data portion 1004. The UL data portion 1004 may sometimes be referred to as the payload of the UL-centric subframe. The UL portion may refer to the communication resources utilized to communicate UL data from the subordinate entity (e.g., UE) to the scheduling entity (e.g., UE or BS). In some configurations, the control portion 1002 may be a physical DL control channel (PDCCH).

As illustrated in FIG. 10, the end of the control portion 1002 may be separated in time from the beginning of the UL data portion 1004. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The UL-centric subframe may also include a common UL portion 1006. The common UL portion 1006 in FIG. 10 may be similar to the common UL portion 1006 described above with reference to FIG. 10. The common UL portion 1006 may additional or alternative include information pertaining to channel quality indicator (CQI), sounding reference signals (SRSs), and various other suitable types of information. One of ordinary skill in the art will understand that the foregoing is merely one example of an UL-centric subframe and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

### EXAMPLE HANDOVER PROCEDURE

As mentioned above, handover of a UE from one base station to another may be beneficial where the UE moves from the coverage of one base station to another. Throughout the present disclosure, many aspects are discussed in terms of specific radio access technologies (RATs), such as LTE, for purposes of clarity. However, the disclosure is not so limited and may apply to any suitable RAT or combination of RATs.

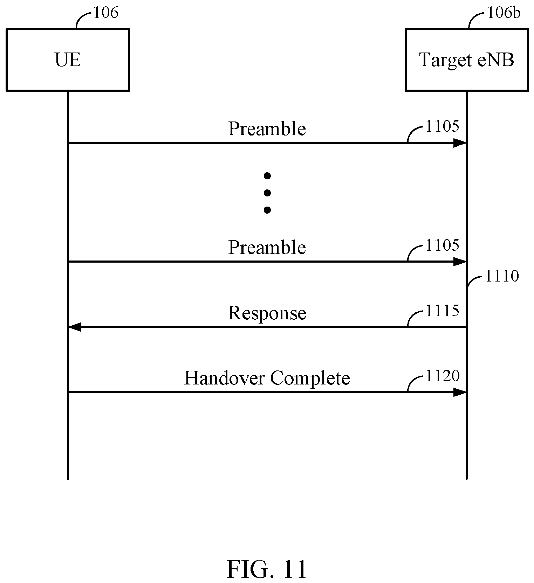

One method for handover may involve the use of a random-access channel (RACH) procedure in order to handover from a source base station to a target base station. FIG. 11 is an illustration of an example flow diagram 1100 for performing such a RACH procedure. In certain aspects, the steps of the flow diagram 1100 may be performed after the UE 102 sends a measurement report to a source base station 106 it is communicating via and based on that report receives a handover command to perform a handover from the source base station 106 to a target base station 106b. In certain aspects, the UE 102 may be configured to send the measurement report only under certain conditions (e.g., the signal strength with the source base station is below a threshold).

The measurement report may include signal strength information (e.g., RSSI, RSRP, RSRQ) about the source base station 106 and one or more detected base stations (e.g., other base stations the UE 102 is within coverage area of (e.g., neighboring base stations)). In addition, the measurement report may include an identifier (e.g., physical cell identifier (PCI)) for each of the one or more detected base stations, so the source base station 106 can identify each of the detected base stations.

The base station 106 (e.g., along with other entities in the communication network) may select one of the detected base station(s) as a target base station to handover communications of the UE 102. For example, the source base station 106, based on this information, may determine the signal strength of the source base station 106 is decreasing (e.g., below a threshold) and the signal strength of one or more of the detected base station(s) is increasing (e.g., above a threshold). The source base station 106 may select a detected base station to be a target base station for handover based on the signal strength information in the measurement report. The source base station 106 may then send a handover request to the target base station 106b (e.g., via a backhaul interface, X2 interface). The target base station 106b may then send a handover request acknowledgement to the source base station 106 (e.g., via a backhaul interface, X2 interface). The source base station 106 may then send a handover command (e.g., RRC Connection Reconfiguration) to the UE 102 to initiate a handover to the target base station 106b. The handover command may identify the target base station 106b.

At 1105, the UE 102 may send/transmit a preamble to the target base station 106b over a RACH. Since the preamble is sent on a random access channel, where communication is not scheduled, collisions may occur with communications from other devices. Accordingly, as shown, the UE 102 may need to attempt to send the preamble multiple times to the target base station 106b. The UE 102 may increment the power used to transmit the preamble each time until the transmission is successful (e.g., the target base station 106b receives the preamble and sends a response according to step 1115).

At 1110, the target base station 106b measures the preamble timing, and based on the measured preamble timing, determines a timing advance for the UE 102 to communicate with the target base station 106b (e.g., using LTE timing advance procedures). For example, a timing advance may be a negative offset with which the UE 102 starts transmission on a given subframe with the target base station 106b on a UL to account for propagation delay so that subframes from different UEs 102 arrive at the target base station 106b at the same time.

Further, at 1115, the target base station 106b transmits a response message (e.g., random access response message) indicating it received the preamble from the UE 102. The response message may include an uplink grant and an indication of the timing advance (e.g., timing advance command (TAC)). The uplink grant may indicate a scheduling of resources (e.g., resource blocks) for the UE 102 to transmit information on a UL to the target base station 106b. At 1120, the UE 102 may receive the response message and transmit a handover complete message (e.g., RRC connection reconfiguration complete message) to the target base station 106b indicating that the handover is complete. The UE 102 may send the handover complete message, and further communicate after handover is complete, according to the scheduling of resources and timing advance information received. Further, the UE 102 may determine a power to use to send the handover complete message, and further communicate after handover is complete, by determining the last power level used to send the preamble successfully to the target base station 106b. For example, the UE 102 may use the same power level as used to successfully send the preamble.

Due to the collisions possible using the RACH procedure and other factors, there may be a delay in handover when using a RACH procedure. Accordingly, certain aspects described herein relate to techniques for performing handover without using a RACH procedure. In particular, in certain aspects, a similar procedure as discussed herein with respect to source base station 106, target base station 106b, and UE 102 may be utilized to select a handover target by the source base station 106, and send a handover request message from the source base station 106 to the target base station 106b. However, instead of performing a RACH procedure to complete the handover, the techniques described herein may be utilized to complete the handover. As discussed with respect to FIG. 11, the RACH procedure may be utilized by the UE to both obtain an uplink grant and achieve uplink timing synchronization between the UE and the target base station. The aspects discussed herein relate to obtaining the uplink grant. For achieving uplink timing synchronization between the UE and target base station any suitable procedure may be used. For example, the uplink timing synchronization may be calculated by the target base station or UE based on downlink measurements.

In certain aspects, the techniques described herein relate to a UE obtaining an uplink grant from a target base station without using a RACH procedure. Further, in certain aspects, the techniques described herein relate to the UE utilizing the uplink grant to transmit a handover complete message (e.g., RRC Connection Reconfiguration Complete) to the target base station. In certain aspects, the UE transmits the handover complete message on a PUSCH.

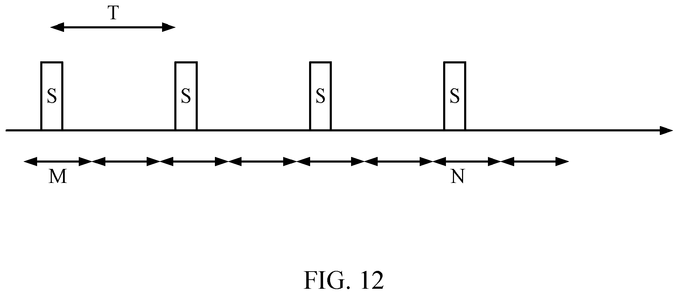

In certain aspects, the uplink grant is a semi-persistent UL grant for a semi-persistent scheduling (SPS). For example, the UL grant may be effective for a certain time period (e.g., number of subframes) and/or a certain number of resources of a UL channel (e.g., physical uplink shared channel (PUSCH), physical uplink control channel (PUCCH), etc.). Accordingly, in certain aspects, the UL grant may specify one or more of a starting system frame number (SFN) (e.g., 0-1023), an ending SFN, a time period T (e.g., in a number of radio frames (e.g., subframes) (e.g., 10-20 ms)), and a subframe number (e.g., 0-9) within an SFN for transmission. As shown with respect to FIG. 12, the UL grant may therefore be valid for the specified subframe number (s) in the starting SFN (M), and for each specified subframe number (s) in each SFN every period T from the starting SFN (M) up to the ending SFN (N). In certain aspects, the target base station may' the semi-persistent UL grant after the UE completes handover before the ending SFN.

In certain aspects, the target base station 106b may generate an uplink grant (e.g., SPS UL grant) and send the uplink grant to the source base station 106 in a message (e.g., as part of the handover request acknowledgement message, handover command message, etc.), such as over a backhaul interface (e.g., X2 interface). In certain aspects, the message is a RRC container, which includes a RRC Connection Reconfiguration. The source base station 106 may then transmit a handover command (e.g., RRC Connection Reconfiguration) including the uplink grant to the UE 102. The UE 102 may utilize the resources and MCS indicated in the uplink grant included in the handover command to send a handover complete message to the target base station 106.

In certain aspects, the target base station 106b may select the resources of a UL channel (e.g., PUSCH, PUCCH, etc.) and/or modulation and coding scheme (MCS) for the uplink grant. For example, the target base station 106b may select the resources and/or MCS to be used for a handover complete message (e.g., RRC Connection Reconfiguration Complete) to be sent from the UE 102 to the target base station 106b. In certain aspects, the target base station 106b utilizes UE measurements of the UE 102, provided in the handover request message received from the source base station 106, to select the resources and MCS.

In certain aspects the periodicity of the uplink grant may be selected by the target base station 106b based on latency requirements (e.g., of bearers of the UE) for completing the handover and/or the available resources of the target base station 106b. For example, in certain aspects, the target base station 106b derives such latency requirements based on the active radio bearers of the UE 102 and/or a type (e.g., UE category as defined in 3GPP) associated with the UE 102. For example, if the UE 102 has more active bearers, a smaller periodicity may be selected, and if the UE 102 has less active bearers, a larger periodicity may be selected. The target base station 106b may receive such information including the active radio bearers and UE type in the handover request message received from the source base station 106.

In certain aspects, a SPS UL grant is valid from the time it is received by the UE 102. However, the target base station 106b may not have information of when the uplink grant is actually received by the UE 102. Accordingly, in certain aspects, instead of having the uplink grant be valid from the time it is received by the UE 102, the target base station 106b may explicitly select a starting time for validity of the uplink grant and signal the starting time to the UE 102 (e.g., via the source base station 106, such as, through the handover acknowledgment message and handover command). In certain aspects, the starting time is described by a SFN and subframe number.

In certain aspects, in order for the UE 102 to utilize the uplink grant at the correct timing, the UE may obtain the timing (e.g., SFN timing) of the target base station 106b. For example, the timing specified in the uplink grant may be with respect to the target base station 106b's UL timing. In certain aspects, the target base station 106b timing and the source base station 106 timing may utilize the same timing. Further, since the UE 102 is already in communication with the source base station 106, it has the timing information of the source base station 106, and can utilize the same timing for the uplink grant.

In certain aspects, the timing of the source base station and the target base station may not necessarily be the same. Accordingly, in certain aspects, the target base station 106b may signal its timing to the UE 102. For example, in certain aspects, the source base station 106 and the target base station 106b may exchange messages over a backhaul (e.g., X2 messages) and determine a timing offset (e.g., SFN time offset) between the timing of the source base station 106 and the target base station 106b. In certain aspects, the timing of the source base station 106 and the target base station 106b may be aligned at subframe boundaries. The source base station 106 may then send the timing offset information to the UE 102 (e.g., in the handover command). The UE 102 may utilize the timing offset, and the known timing information for the source base station 106, to determine the timing of the target base station 106b and utilize that timing for the uplink grant.

In certain aspects, instead of the target base station 106b signaling the timing to the UE 102, the UE 102 may read the master information block (MIB) broadcast by the target base station 106b to determine the SFN timing of the target base station 106b. In certain aspects, the UE 102 may read the MIB during the handover procedure (e.g., after receiving the handover command from the source base station 106). In certain aspects, the UE 102 may read the MIB of the target base station 106b when reporting to the base station 106 (e.g., reporting to the source base station 106 that a neighbor is better than the PCell, such as, during an A3 event), while communicating with the source base station 106, to prevent taking extra time to read the MIB.

In certain aspects, the UE 102 may utilize a similar open loop power control procedure as discussed with respect to FIG. 11 for transmitting the preamble to transmit the handover complete message to the target base station 106b. For example, the UE 102 may start at a particular power level to attempt to transmit the handover complete message at a first time period specified by the uplink grant. If the transmission is not successful (e.g., a response, such as an acknowledgement is not received by the UE from the target base station 106b), the UE 102 may increment the power level (e.g., by a power offset, by a predefined power offset, etc.) used to transmit the handover complete message and retransmit the handover complete message at the higher power level, and continue the process of incrementing and retransmitting until the handover complete message is successfully transmitted and received.

In certain aspects, the source base station 106 or target base station 106b can provide information to the UE 102 for power control to send the handover complete message from the UE 102 to the target base station 106b. For example, source base station 106 or target base station 106b may select a power offset for the UE 102 to use and provide the information to the UE 102 (e.g., in the handover command). In certain aspects, the source base station 106 or target base station 106b may utilize the UE measurement report to select a power offset. For example, if the measurement report indicates a lower signal strength between the target base station 106b and the UE 102, a larger power offset may be selected. If the measurement report indicates a higher signal strength between the target base station 106b and the UE 102, a smaller power offset may be selected. The power offset may be used by the UE 102 in the open loop power control procedure, or just as a single power offset to use to try and send the handover complete message.

In certain aspects, instead of providing a SPS uplink grant to the UE 102, the target base station 106b provides a dynamic uplink grant to the UE 102 for a dynamic scheduling (DS) (e.g., on PUSCH). In DS, the UE may be scheduled/assigned resources in one or more subframes of a UL channel (e.g., PUSCH).

In certain aspects, to obtain the dynamic UL grant, the UE 102 may start monitoring the PDCCH of the target base station 106b after receiving the handover command from the source base station 106. In some aspects, that starting time for the UE 102 to monitor the PDCCH may be configured by the target base station 106b. The target base station 106b may signal the starting time to the UE 102 (e.g., via the source base station 106, such as, through the handover acknowledgment message and handover command). In such aspects, the UE 102 may also need the SFN timing of the target base station 106b, to interpret the starting timing received from the target base station 106b. In certain aspects, the UE 102 may obtain the SFN timing of the target base station 106b using similar procedures as discussed with respect to the SPS UL grant. In certain aspects, instead of the target base station 106b signaling a starting time to the UE 102, the target base station 106b may select a time to start sending grants based on an approximate time (e.g., predefined) the UE 102 is expected to receive the handover command and then begin monitoring the PDCCH.

In certain aspects, the UE 102 sends the handover complete message using the resources assigned in the dynamic UL grant, and further monitors for additional uplink grants if the handover complete message is not delivered successfully to the target base station 106b. In certain aspects, the UE 102 may utilize a similar open loop power control procedure for transmitting the handover complete message to the target base station 106b utilizing the dynamic UL grant as the procedure discussed with respect to FIG. 11 for transmitting the preamble and with respect to transmitting the handover complete message to the target base station 106b utilizing the SPS UL grant. For example, the UE 102 may start at a particular power level to attempt to transmit the handover complete message on resources specified by a first dynamic uplink grant. If the transmission is not successful (e.g., a response, such as an acknowledgement is not received by the UE from the target base station 106b), the UE 102 may increment the power level (e.g., by a power offset, by a predefined power offset, etc.) used to transmit the handover complete message, monitor for another uplink grant, and retransmit the handover complete message at the higher power level on resources specified by the other dynamic uplink grant, and continue the process of incrementing and retransmitting until the handover complete message is successfully transmitted and received.

In certain aspects, the source base station 106 or target base station 106b can provide information to the UE 102 for power control to send the handover complete message from the UE 102 to the target base station 106b. For example, source base station 106 or target base station 106b may select a power offset for the UE 102 to use and provide the information to the UE 102 (e.g., in the handover command). In certain aspects, the source base station 106 or target base station 106b may utilize the UE measurement report to select a power offset. For example, if the measurement report indicates a lower signal strength between the target base station 106b and the UE 102, a larger power offset may be selected. If the measurement report indicates a higher signal strength between the target base station 106b and the UE 102, a smaller power offset may be selected. The power offset may be used by the UE 102 in the open loop power control procedure, or just as a single power offset to use to try and send the handover complete message.

In certain aspects, the target base station 106b may provide a transmit power control (TPC) command to the UE 102 (e.g., in the dynamic UL grant) to indicate the power offset from the previously used power setting of the UE 102. For example, in certain aspects, the TPC command may include 2-bits that indicate a power increase of up to 2dB by the UE 102 to try and transmit the handover complete message. In some aspects, the TPC command may borrow bits from other fields in the dynamic UL grant (e.g., the 1-bit of the A-CSI triggering information field, fields for other control information, etc.) to indicate larger power increases (e.g., 7 dB). In some aspects, the target base station 106b may send dynamic UL grants frequently (e.g., back-to-back) in order to increase transmit power of the UE 102 more quickly. In certain aspects, the dynamic UL grants may include an indicator of whether the UE 102 should send data in the resources defined by the dynamic UL grant or not. For example, base station 106b may be sending multiple dynamic UL grants to increase the transmission power of the UE 102, and only indicate to send data in the resources defined by the last dynamic UL grant. In certain aspects, the UE 102 may not send a handover complete message if a grant is smaller than needed (e.g., no RLC segmentation is allowed).

FIG. 13 illustrates example operations 1300 for performing handover that may be performed by a target base station, in accordance with certain aspects of the present disclosure.

At 1302, the target base station receives a handover request from a source base station for handover of communication of a user equipment from the source base station to the target base station. At 1304, the target base station generates a semi-persistent scheduling uplink grant for the user equipment to transmit a handover complete message based on receiving the handover request. At 1306, the target base station communicates the grant to the user equipment (e.g., via the source base station).

FIG. 14 illustrates example operations 1400 for performing handover that may be performed by a user equipment, in accordance with certain aspects of the present disclosure.

At 1402, the user equipment receives, from a source base station, a semi-persistent scheduling uplink grant for the user equipment to transmit a handover complete message to a target base station for handover of communication of the user equipment from the source base station to the target base station. At 1404, the user equipment transmits the handover complete message (e.g., to the target base station) based on the grant.

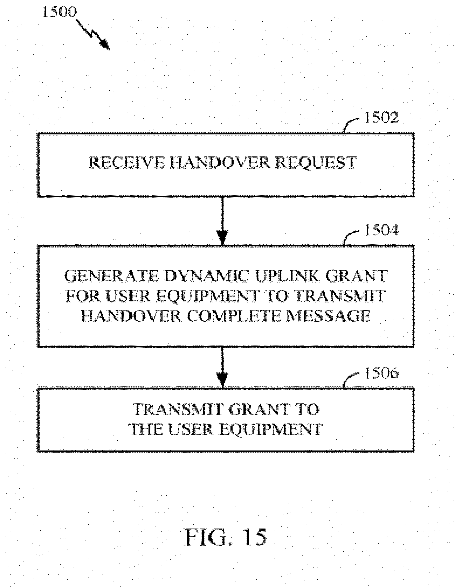

FIG. 15 illustrates example operations 1500 for performing handover that may be performed by a target base station, in accordance with certain aspects of the present disclosure.

At 1502, the target base station receives a handover request from a source base station for handover of communication of a user equipment from the source base station to the target base station. At 1504, the target base station generates a dynamic uplink grant for the user equipment to transmit a handover complete message based on receiving the handover request. At 1506, the target base station transmits the grant to the user equipment (e.g., directly).

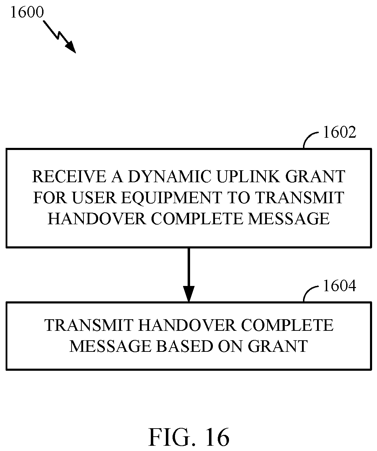

FIG. 16 illustrates example operations 1600 for performing handover that may be performed by a user equipment, in accordance with certain aspects of the present disclosure.

At 1602, the user equipment receives, from a target base station, a dynamic uplink grant for the user equipment to transmit a handover complete message to the target base station for handover of communication of the user equipment from the source base station to the target base station. At 1604, the user equipment transmits the handover complete message based on the grant.

### EXAMPLE LOW LATENCY HANDOVER

To perform handover from a source base station to a target base station, a UE may perform a random access channel (RACH) procedure at the target base station. By performing the RACH procedure at the target base station, the UE can determine uplink timing and receive an uplink grant from the target base station for use in transmitting an indication that handover has been completed.

Various techniques have been proposed for reducing handover latency in wireless networks. Some techniques may include performing handover from a source base station (or base station) to a target base station without the UE performing a random access channel (RACH) procedure. In a "RACH-less" handover, the timing offset for uplink synchronization may be calculated by the target base station or the UE, and the UE may obtain and use a grant of uplink resources for the transmission of a handover command, as discussed herein.

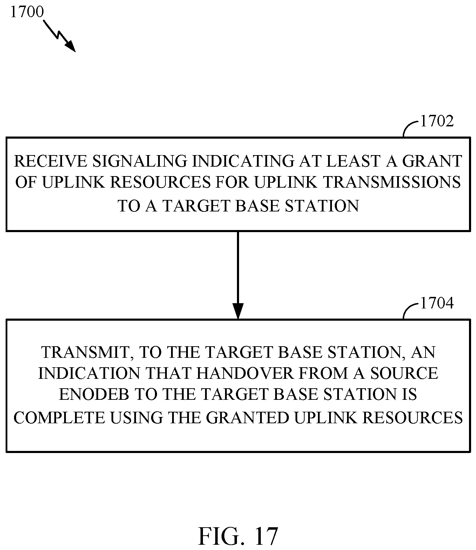

FIG. 17 illustrates example operations that may be performed by a user equipment to obtain uplink resources for transmission of a handover command, in accordance with certain aspects of the present disclosure. As illustrated, operations 1700 start at 1702, where a UE receives signaling indicating at least a grant of uplink resources for uplink transmissions to a target base station. As discussed in further detail herein, the signaling may be received from the target base station (e.g., as a dynamic grant of uplink resources via signaling on the physical downlink control channel (PDCCH)) or the source base station (e.g., in radio resource configuration (RRC) signaling from the source base station).

At 1704, the UE transmits, to the target base station, an indication that handover from a source base station to the target base station is complete. The indication may be transmitted to the target base station using the granted uplink resources (e.g., the resources indicated in PDCCH signaling from a target base station or in RRC signaling from the source base station).

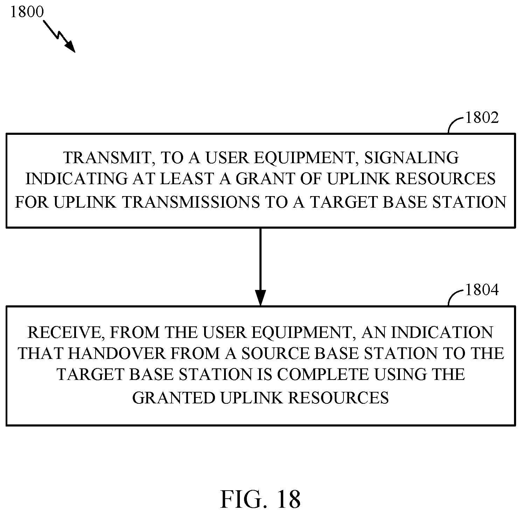

FIG. 18 illustrates example operations that may be performed by an base station to signal a grant of uplink resources to a UE for transmission of a handover command, in accordance with certain aspects of the present disclosure. As illustrated, operations 1800 start at 1802, where an base station transmits, to a UE, signaling indicating at least a grant of uplink resources for uplink transmissions to a target base station. At 1804, the base station receives, from the user equipment, an indication that handover from a source base station to the target base station is complete. The indication may be received from the UE on the granted uplink resources.

To obtain a grant of uplink resources for transmission of a handover command in a RACH-less handover procedure, a UE may receive signaling from a target base station indicating the granted resources. Signaling received from the target base station indicating the granted resources may include, for example, a periodic grant of uplink resources for a specific duration. The duration during which the grant of uplink resources is valid may be, for example, identified as a number of grant occasions, which may be signaled with the grant, or an amount of time (e.g., in milliseconds) that the grant is valid. In some cases, the grant of uplink resources may indicate a periodicity and timing offset for uplink transmissions on the granted uplink resources which may be chosen, for example, such that the grant occasions are consistent across a plurality of frames. In some cases, the UE may use the signaled uplink grant until the UE successfully transmits a handover complete message (e.g., an RRC Reconfiguration Complete message) to the target base station. After the UE transmits the handover complete message, the UE may release the granted uplink resources. In some cases, the UE may use the granted uplink resources until the UE receives a grant cancellation message from the target base station. The grant cancellation message may be received, for example, via physical layer (PHY) signaling (e.g., signaling carried on the PDCCH), media access control layer (MAC) signaling (e.g., signaling in a MAC Control Element), or upper layer signaling (e.g., RRC signaling).

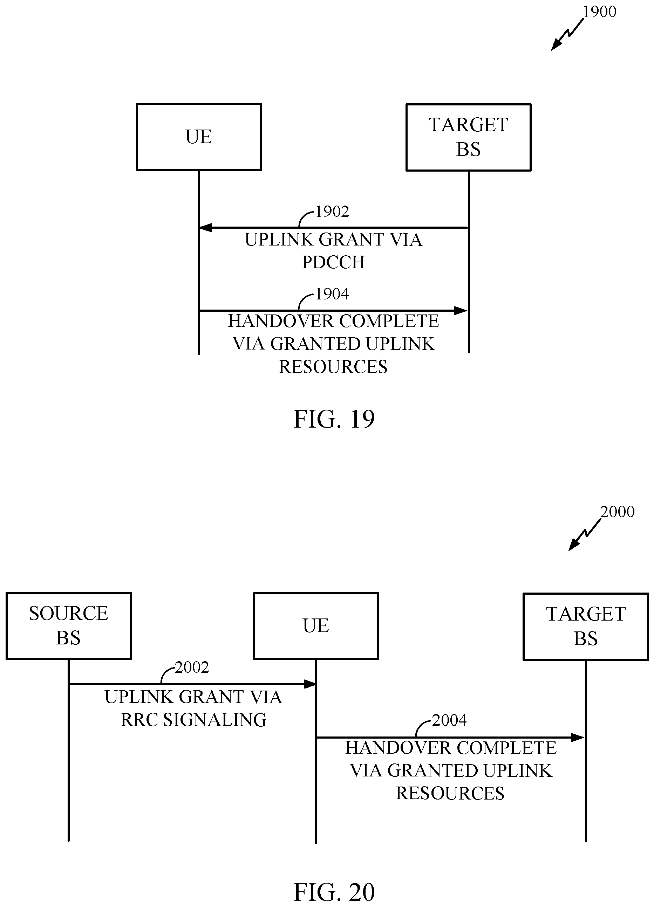

FIG. 19 is a call flow diagram 1900 illustrating an example of messages that may be exchanged between a UE and a target base station for obtaining uplink resources for transmission of a handover command, in accordance with certain aspects of the present disclosure. As illustrated, a UE may receive a message 1902 from the target base station including a grant of uplink resources. Message 1902 may be carried, for example, on the physical downlink control channel (PDCCH). The UE may synchronize uplink timing with the target base station, and after synchronization, transmit a handover complete message 1904 to the target base station using the granted uplink resources.

In some cases, the UE may receive signaling from a source base station indicating the grant of uplink resources for transmitting a handover complete message to the target base station. The signaling from a source base station may be, for example, a handover command in radio resource control (RRC) signaling and may be prompted by a target base station. FIG. 20 is a call flow diagram 2000 illustrating an example of messages that may be exchanged between a UE, a source base station, and a target base station for obtaining uplink resources for transmission of a handover command, in accordance with certain aspects of the present disclosure. As illustrated, a source base station can transmit information about an uplink grant to the UE in message 2002. Message 2002 may be carried via, for example, RRC signaling and may indicate the uplink resources to be used by the UE to transmit a handover command to the target base station. After the UE synchronizes uplink timing with the target base station, the UE may transmit a handover complete message 2004 to the target base station using the granted uplink resources indicated in the signaling from the source base station.

In some cases, the information about the grant of uplink resources may include information configuring the UE for sounding reference signal (SRS) transmission to the target base station. The SRS configuration may indicate periodic SRS transmission, and the target base station may select an SRS periodicity and subframe offset such that the UE can determine when to transmit SRS without knowledge of a subframe number at the target base station.

In some cases, the SRS configuration may indicate transmission of aperiodic SRS. To indicate transmission of an aperiodic SRS, the base station can include an SRS request in an RRC configuration message. The UE may transmit an SRS to the target base station upon completion of radio resource control (RRC) reconfiguration. In some cases, the UE may repeat transmission of the SRS with a handover complete message at the periodic grant occasions indicated in the uplink grant information, as discussed above. An SRS configuration for transmission of aperiodic SRS may include an indication of a number of SRS transmissions. In some cases, SRS transmission may be performed at a time offset from an uplink grant occasion indicated in the information about the grant of uplink resources. In some cases, the UE may monitor transmissions on PDCCH from the target base station for an SRS trigger before performing an initial transmission on the uplink resources.

In some cases, the information about the grant of uplink resources may include information about transmission power for transmitting, e.g., a handover complete message on the granted uplink resources. The transmission power information may include, for example, transmit power control information (e.g., power control adjustments) or other power information that the UE can use to adjust the amount of power used in performing uplink transmissions on the granted resources.

To reduce handover latency, a UE may perform a RACH procedure with compressed timing relative to a legacy RACH procedure. After a UE transmits a RACH preamble to the target base station at subframe n, the UE may receive a RACH response at subframe *n*+*j,* where *j* is less than a number of subframes after which the RACH response is expected to be received in a legacy RACH procedure (*e*.*g*., where *j* is less than 3). The UE may monitor for a RACH response after subframe *n*+*j*-1. After the UE receives the RACH response, the UE may transmit a connection request message (e.g. RACH msg3) to the target base station at subframe *n*+*j*+*k,* where *k* is less than a number of subframes after which the connection request message is transmitted in response to receiving the RACN response in a legacy RACH procedure (e.g., where k is less than 6).

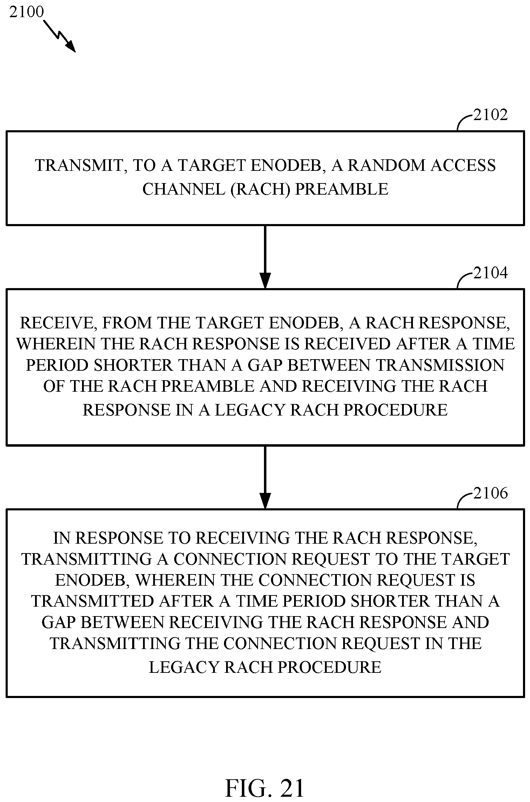

FIG. 21 illustrates example operations that may be performed by a UE to perform a RACH procedure with compressed timing relative to a legacy RACH procedure, in accordance with certain aspects of the present disclosure. As illustrated, operations 2100 begin at 2102, where a UE transmits, to a target base station, a random access channel (RACH) preamble. At 2104, the UE receives, from the target base station, a RACH response. The RACH response is generally received after a time period shorter than a gap between transmission of the RACH preamble and receiving the RACH response in a legacy RACH procedure. At 2106, in response to receiving the RACH response, the UE transmits a connection request to the target base station. The connection request is generally transmitted after a time period shorter than a gap between receiving the RACH response and transmitting the connection request in the legacy RACH procedure.

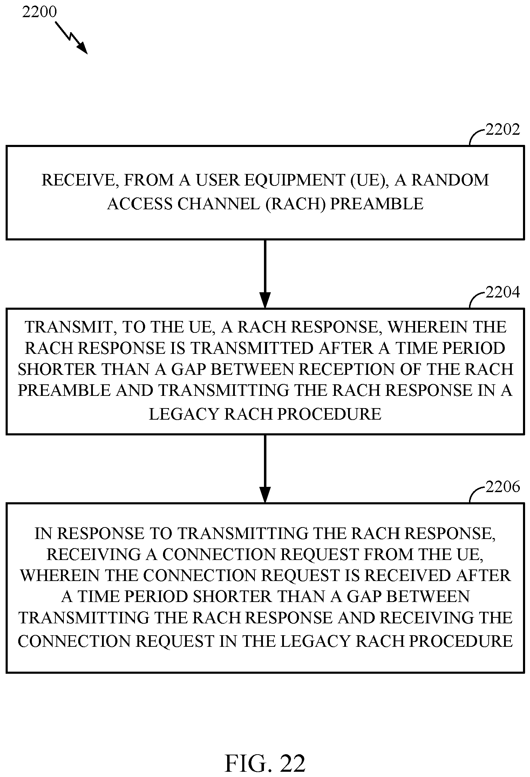

FIG. 22 illustrates example operations that may be performed by a base station to perform a RACH procedure with compressed timing relative to a legacy RACH procedure, in accordance with certain aspects of the present disclosure. As illustrated, operations 2200 begin at 2202, where a target base station receives, from a UE, a random access channel (RACH) preamble. At 2204, the target base station transmits, to the UE, a RACH response. The RACH response is generally transmitted after a time period shorter than a gap between reception of the RACH preamble and transmitting the RACH response in a legacy RACH procedure. At 2206, in response to transmitting the RACH response, the target base station receives a connection request from the UE. The connection request is generally received after a time period shorter than a gap between transmitting the RACH response and receiving the connection request in the legacy RACH procedure.

It is understood that the specific order or hierarchy of steps in the processes disclosed is an illustration of exemplary approaches. Based upon design preferences, it is understood that the specific order or hierarchy of steps in the processes may be rearranged. Further, some steps may be combined or omitted. The accompanying method claims present elements of the various steps in a sample order, and are not meant to be limited to the specific order or hierarchy presented.

Moreover, the term "or" is intended to mean an inclusive "or" rather than an exclusive "or." That is, unless specified otherwise, or clear from the context, the phrase, for example, "X employs A or B" is intended to mean any of the natural inclusive permutations. That is, for example the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form. A phrase referring to "at least one of" a list of items refers to any combination of those items, including single members. As an example, "at least one of: *a, b,* or *c*" is intended to cover: *a, b, c, a-b, a-c, b-c, and a-b-c,* as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method of wireless communication performed by a target base station, the method comprising:
receiving (1302) a handover request from a source base station for handover of communication of a user equipment from the source base station to the target base station;
generating (1304) an uplink grant for the user equipment to transmit a handover complete message based on receiving the handover request at the target base station;
selecting a starting time for the validity of the uplink grant with respect to a subframe offset between the target base station and the source base station; and
communicating (1306) the uplink grant and the starting time for the uplink grant to the user equipment via the source base station, wherein communicating the uplink grant comprises transmitting a radio resource control container including a radio resource control connection reconfiguration message to the source base station for retransmission of the uplink grant and the starting time for the uplink grant to the user equipment.

2. The method of claim 1, the method further comprises receiving, from the user equipment, an indication that handover from the source base station to the target base station is complete using the uplink grant.

3. The method of claim 1, further comprising:
selecting one or more resources of an uplink channel and a modulation and coding scheme for the user equipment to transmit the handover complete message, wherein the grant comprises an indication of the one or more resources of the uplink channel and the modulation and coding scheme.

4. The method of claim 3, wherein selecting the one or more resources and the modulation and coding scheme is based on measurements made by the user equipment provided in the handover request.

5. The method of claim 1, further comprising:
communicating a power offset for transmitting the handover complete message to the user equipment.

6. A method of wireless communication performed by a user equipment, the method comprising:
receiving (1402), from a target base station via a source base station, an uplink grant and a starting time for the validity of the uplink grant with respect to a subframe offset between the target base station and the source base station in a radio resource control container including a radio resource control connection reconfiguration message for the user equipment to transmit a handover complete message to the target base station for handover of communication of the user equipment from the source base station to the target base station based on a handover request from the source base station to the target base station; and
transmitting (1404) the handover complete message based on the grant.

7. The method of claim 6, wherein the handover complete message is transmitted using granted uplink resources indicated in the uplink grant.

8. The method of claim 6, wherein the uplink grant comprises signaling indicating transmission power for uplink transmissions using granted uplink resources.

9. A target base station comprising:
means for receiving a handover request from a source base station for handover of communication of a user equipment from the source base station to the target base station;
means for generating an uplink grant for the user equipment to transmit a handover complete message based on receiving the handover request at the target base station;
means for selecting a starting time for the validity of the uplink grant with respect to a subframe offset between the target base station and the source base station; and
means for communicating the uplink grant and the starting time for the uplink grant to the user equipment via the source base station, wherein communicating the uplink grant comprises transmitting a radio resource control container including a radio resource control connection reconfiguration message to the source base station for retransmission of the uplink grant and the starting time for the uplink grant to the user equipment.

10. A user equipment comprising:
means for receiving, from a target base station via a source base station, an uplink grant and a starting time for the validity of the uplink grant with respect to a subframe offset between the target base station and the source base station in a radio resource control container including a radio resource control connection reconfiguration message for the user equipment to transmit a handover complete message to the target base station for handover of communication of the user equipment from the source base station to the target base station based on a handover request from the source base station to the target base station; and
means for transmitting the handover complete message based on the grant.

11. A computer program having instructions stored thereon for causing at least one processor in a target base station to perform a method according to any of claims 1 to 5.

12. A computer program having instructions stored thereon for causing at least one processor in user equipment to perform a method according to any of claims 6 to 8.

## Patentansprüche

1. Ein Verfahren zur drahtlosen Kommunikation, das von einer Zielbasisstation durchgeführt wird, das Verfahren aufweisend:
Empfangen (1302) einer Übergabeanfrage von einer Quellbasisstation für eine Übergabe einer Kommunikation eines Benutzergeräts von der Quellbasisstation an die Zielbasisstation;
Erzeugen (1304) einer Aufwärtsverbindungserteilung für das Benutzergerät zum Übertragen einer Übergabeabschluss-Nachricht basierend auf Empfangen der Übergabeanfrage an der Zielbasisstation;
Auswählen einer Startzeit für die Gültigkeit der Aufwärtsverbindungserteilung in Bezug auf einen Unterrahmenversatz zwischen der Zielbasisstation und der Quellbasisstation; und
Kommunizieren (1306) der Aufwärtsverbindungserteilung und der Startzeit für die Aufwärtsverbindungserteilung an das Benutzergerät über die Quellbasisstation, wobei Kommunizieren der Aufwärtsverbindungserteilung Übertragen eines Funkressourcensteuerungs-Containers aufweist, der enthält eine Funkressourcensteuerungs-Verbindungsrekonfigurationsnachricht, an die Quellbasisstation für erneute Übertragung der Aufwärtsverbindungserteilung und der Startzeit für die Aufwärtsverbindungserteilung an das Benutzergerät.

2. Das Verfahren gemäß Anspruch 1, das Verfahren weiter aufweisend:
Empfangen, von dem Benutzergerät, einer Anzeige, dass eine Übergabe von der Quellbasisstation an die Zielbasisstation abgeschlossen ist unter Verwendung der Aufwärtsverbindungserteilung.

3. Das Verfahren gemäß Anspruch 1, weiter aufweisend:
Auswählen einer oder mehrerer Ressourcen eines Aufwärtsverbindungskanals und eines Modulations- und Kodierungsschemas für das Benutzergerät zum Übertragen der Übergabeabschluss-Nachricht, wobei die Erteilung eine Anzeige der einen oder mehreren Ressourcen des Aufwärtsverbindungskanals und des Modulations- und Kodierungsschemas aufweist.

4. Das Verfahren gemäß Anspruch 3, wobei Auswählen der einen oder mehreren Ressourcen und des Modulations- und Kodierungsschemas auf Messungen basiert, gemacht durch das Benutzergerät, bereitgestellt in der Übergabeanfrage.

5. Das Verfahren gemäß Anspruch 1, weiter aufweisend:
Kommunizieren eines Leistungsversatzes zum Übertragen der Übergabeabschluss-Nachricht an das Benutzergerät.

6. Ein Verfahren zur drahtlosen Kommunikation, das von einem Benutzergerät durchgeführt wird, das Verfahren aufweisend:
Empfangen (1402), von einer Zielbasisstation über eine Quellbasisstation, einer Aufwärtsverbindungserteilung und einer Startzeit für die Gültigkeit der Aufwärtsverbindungserteilung in Bezug auf einen Unterrahmenversatz zwischen der Zielbasisstation und der Quellbasisstation in einem Funkressourcensteuerungs-Container, der enthält eine Funkressourcensteuerungs-Verbindungsrekonfigurationsnachricht für das Benutzergerät zum Übertragen einer Übergabeabschluss-Nachricht an die Zielbasisstation für eine Übergabe einer Kommunikation des Benutzergeräts von der Quellbasisstation an die Zielbasisstation basierend auf einer Übergabeanfrage von der Quellbasisstation an die Zielbasisstation; und
Übertragen (1404) der Übergabeabschluss-Nachricht basierend auf der Erteilung.

7. Das Verfahren gemäß Anspruch 6, wobei die Übergabeabschluss-Nachricht übertragen wird unter Verwendung erteilter Aufwärtsverbindungsressourcen, angezeigt in der Aufwärtsverbindungserteilung.

8. Das Verfahren gemäß Anspruch 6, wobei die Aufwärtsverbindungserteilung eine Signalisierung aufweist, die eine Übertragungsleistung für Aufwärtsverbindungsübertragungen unter Verwendung erteilter Aufwärtsverbindungsressourcen anzeigt.

9. Eine Zielbasisstation, aufweisend:
Mittel zum Empfangen einer Übergabeanfrage von einer Quellbasisstation für eine Übergabe einer Kommunikation eines Benutzergeräts von der Quellbasisstation an die Zielbasisstation;
Mittel zum Erzeugen einer Aufwärtsverbindungserteilung für das Benutzergerät zum Übertragen einer Übergabeabschluss-Nachricht basierend auf Empfangen der Übergabeanfrage an der Zielbasisstation;
Mittel zum Auswählen einer Startzeit für die Gültigkeit der Aufwärtsverbindungserteilung in Bezug auf einen Unterrahmenversatz zwischen der Zielbasisstation und der Quellbasisstation; und
Mittel zum Kommunizieren der Aufwärtsverbindungserteilung und der Startzeit für die Aufwärtsverbindungserteilung an das Benutzergerät über die Quellbasisstation, wobei Kommunizieren der Aufwärtsverbindungserteilung Übertragen eines Funkressourcensteuerungs-Containers aufweist, der enthält eine Funkressourcensteuerungs-Verbindungsrekonfigurationsnachricht, an die Quellbasisstation für erneute Übertragung der Aufwärtsverbindungserteilung und der Startzeit für die Aufwärtsverbindungserteilung an das Benutzergerät.

10. Ein Benutzergerät, aufweisend:
Mittel zum Empfangen, von einer Zielbasisstation über eine Quellbasisstation, einer Aufwärtsverbindungserteilung und einer Startzeit für die Gültigkeit der Aufwärtsverbindungserteilung in Bezug auf einen Unterrahmenversatz zwischen der Zielbasisstation und der Quellbasisstation in einem Funkressourcensteuerungs-Container, der enthält eine Funkressourcensteuerungs-Verbindungsrekonfigurationsnachricht für das Benutzergerät zum Übertragen einer Übergabeabschluss-Nachricht an die Zielbasisstation für eine Übergabe einer Kommunikation des Benutzergeräts von der Quellbasisstation an die Zielbasisstation basierend auf einer Übergabeanfrage von der Quellbasisstation an die Zielbasisstation; und
Mittel zum Übertragen der Übergabeabschluss-Nachricht basierend auf der Erteilung.

11. Ein Computerprogramm mit darauf gespeicherten Anweisungen zum Veranlassen zumindest eines Prozessors in einer Zielbasisstation, ein Verfahren gemäß einem der Ansprüche 1 bis 5 durchzuführen.

12. Ein Computerprogramm mit darauf gespeicherten Anweisungen zum Veranlassen zumindest eines Prozessors in einem Benutzergerät, ein Verfahren gemäß einem der Ansprüche 6 bis 8 durchzuführen.

## Revendications

1. Un procédé de communication sans fil réalisé par une station de base cible, le procédé comprenant :
la réception (1302) d'une requête de handover en provenance d'une station de base source pour un handover de communication d'un équipement utilisateur de la station de base source à la station de base cible ;
la génération (1304) d'une autorisation de liaison montante pour l'équipement utilisateur pour transmettre un message d'achèvement de handover sur la base de la réception de la requête de handover au niveau de la station de base cible ;
la sélection d'un instant de départ pour la validité de l'autorisation de liaison montante par rapport à un décalage de sous-trame entre la station de base cible et la station de base source ; et
la communication (1306) de l'autorisation de liaison montante et de l'instant de départ pour l'autorisation de liaison montante à l'équipement utilisateur via la station de base source, dans lequel la communication de l'autorisation de liaison montante comprend la transmission à la station de base source d'un conteneur de contrôle de ressource radio comportant un message de reconfiguration de connexion de contrôle de ressource radio pour une retransmission à l'équipement utilisateur de l'autorisation de liaison montante et de l'instant de départ pour l'autorisation de liaison montante.

2. Le procédé selon la revendication 1, le procédé comprend en outre la réception, en provenance de l'équipement utilisateur, d'une indication qu'un handover de la station de base source à la station de base cible est achevé en utilisant l'autorisation de liaison montante.

3. Le procédé selon la revendication 1, comprenant en outre :
la sélection d'une ou plusieurs ressources d'un canal de liaison montante et d'un schéma de modulation et de codage pour l'équipement utilisateur pour transmettre le message d'achèvement de handover, dans lequel l'autorisation comprend une indication des une ou plusieurs ressources du canal de liaison montante et du schéma de modulation et de codage.

4. Le procédé selon la revendication 3, dans lequel les une ou plusieurs ressources et le schéma de modulation et de codage sont basés sur des mesures réalisées par l'équipement utilisateur délivrées dans la requête de handover.

5. Le procédé selon la revendication 1, comprenant en outre :
la communication d'un décalage de puissance pour la transmission à l'équipement utilisateur du message d'achèvement de handover.

6. Un procédé de communication sans fil réalisé par un équipement utilisateur, le procédé comprenant :
la réception (1402), en provenance d'une station de base cible via une station de base source, d'une autorisation de liaison montante et d'un instant de départ pour la validité de l'autorisation de liaison montante par rapport à un décalage de sous-trame entre la station de base cible et la station de base source dans un conteneur de contrôle de ressource radio comportant un message de reconfiguration de connexion de contrôle de ressource radio pour l'équipement utilisateur pour transmettre à la station de base cible un message d'achèvement de handover pour un handover de communication de l'équipement utilisateur de la station de base source à la station de base cible sur la base d'une requête de handover de la station de base source à la station de base cible ; et
la transmission (1404) du message d'achèvement de handover sur la base de l'autorisation.

7. Le procédé selon la revendication 6, dans lequel le message d'achèvement de handover est transmis en utilisant des ressources de liaison montante autorisées indiquées dans l'autorisation de liaison montante.

8. Le procédé selon la revendication 6, dans lequel l'autorisation de liaison montante comprend une signalisation indiquant une puissance de transmission pour des transmissions de liaison montante en utilisant des ressources de liaison montante autorisées.

9. Une station de base cible comprenant :
un moyen pour recevoir une requête de handover en provenance d'une station de base source pour un handover de communication d'un équipement utilisateur de la station de base source à la station de base cible ;
un moyen pour générer une autorisation de liaison montante pour l'équipement utilisateur pour transmettre un message d'achèvement de handover sur la base de la réception de la requête de handover au niveau de la station de base cible ;
un moyen pour sélectionner un instant de départ pour la validité de l'autorisation de liaison montante par rapport à un décalage de sous-trame entre la station de base cible et la station de base source ; et
un moyen pour communiquer l'autorisation de liaison montante et l'instant de départ pour l'autorisation de liaison montante à l'équipement utilisateur via la station de base source, dans lequel la communication de l'autorisation de liaison montante comprend la transmission à la station de base source d'un conteneur de contrôle de ressource radio comportant un message de reconfiguration de connexion de contrôle de ressource radio pour une retransmission à l'équipement utilisateur de l'autorisation de liaison montante et de l'instant de départ pour l'autorisation de liaison montante.

10. Un équipement utilisateur comprenant :
un moyen pour recevoir, en provenance d'une station de base cible via une station de base source, une autorisation de liaison montante et un instant de départ pour la validité de l'autorisation de liaison montante par rapport à un décalage de sous-trame entre la station de base cible et la station de base source dans un conteneur de contrôle de ressource radio comportant un message de reconfiguration de connexion de contrôle de ressource radio pour l'équipement utilisateur pour transmettre un message d'achèvement de handover à la station de base cible pour un handover de communication de l'équipement utilisateur de la station de base source à la station de base cible sur la base d'une requête de handover de la station de base source à la station de base cible ; et
un moyen pour transmettre le message d'achèvement de handover sur la base de l'autorisation.

11. Un programme de calculateur avec des instructions stockées dessus pour amener au moins un processeur dans une station de base cible à réaliser un procédé selon une des revendications 1 à 5.

12. Un programme de calculateur avec des instructions stockées dessus pour amener au moins un processeur dans un équipement utilisateur à réaliser un procédé selon une des revendications 6 à 8.
